# EUROPEAN PATENT SPECIFICATION

(11) **EP 2 761 233 B1**
(45) Date of publication and mention of the grant of the patent: **17.10.2018**
(21) Application number: 12714128.1
(22) Date of filing: 27.03.2012
(51) Int. Cl.: H04L 12/28, F24F 11/00, G05B 15/02

(54) **SYSTEM AND METHOD FOR PROVIDING A SIMULATED WINDOW UTILIZING ENVIRONMENTAL CONTROLS OPERABLE WITHIN A BUILDING AUTOMATION SYSTEM**
SYSTEM UND VERFAHREN ZUR BEREITSTELLUNG EINES SIMULIERTEN FENSTERS MIT UMWELTREGELUNG IN EINEM GEBÄUDEAUTOMATISIERUNGSSYSTEM
SYSTÈME ET PROCÉDÉ DE MISE EN OEUVRE D'UNE FENÊTRE SIMULÉE UTILISANT DES MOYENS DE CONTRÔLE DE L'ENVIRONNEMENT POUVANT SERVIR DANS UN SYSTÈME D'IMMOTIQUE DE BÂTIMENT

(30) Priority: 30.09.2011 US 201161541794 P; 26.03.2012 US 201213430279
(43) Date of publication of application: 06.08.2014
(73) Proprietor: Siemens Schweiz AG, 8047 Zürich (CH)
(72) Inventor: BORNSIDE, David E., Palatine, IL 60067 (US); MITTRACH, Olaf, CH-6312 Steinhausen (CH)
(74) Representative: Maier, Daniel Oliver
(86) International application number: PCT/US2012/030694
(87) International publication number: WO 2013/048564

(56) References cited:
- US-A1- 2005 119 766
- US-A1- 2008 277 486

## Description

### RELATED APPLICATION

This patent document claims priority under 35 U.S.C. §119(e) and all other benefits from U.S. Provisional Patent Application No. 61/541,794, titled "System and Method for Providing a Simulated Window Utilizing Environmental Controls Operable within a Building Automation System," filed September 30, 2011.

### TECHNICAL FIELD

This patent document generally relates to environmental control within a structure and more particularly to a system and method for providing or simulating an open window within the confined space of a structure.

### BACKGROUND

Known building automation systems are typically designed and configured to monitor, report and control the environmental and/or safety conditions within a structure. For example, in order to maintain the temperature at a desired set point, the building automation system may drive one or more environmental control devices to a steady state condition centered on the set point. By adjusting the output and operation of the one or more environmental control devices, the building automation system can maintain a constant environmental condition within the structure.

Over time, maintenance of these steady state conditions by the building automation system can result in areas or pockets of the structure feeling stale or closed off due to, for example, lack of air circulation and/or low lighting conditions. In order to combat this stale feeling, an occupant of the building may desire to open a window or otherwise direct outside air into the room. However, in some circumstances this option might be unavailable because the room or space is located in an interior portion of the structure and lacks an exterior window. In other instances, simply opening a window is undesirable because an open window requires monitoring, may be precluded by inclement weather or may be prohibited based on the design of the structure. Furthermore, the structure may lack the ducting and circulation systems needed to effectively direct outside air into the room. The patent application US2005/119766A1pertains to simplified interfaces for controllers having schedule override capabilities and discloses methods for modifying a programmable schedule for controllers having a user interface and controllers having programmable schedules. The patent application US2008/0277486A1 discloses an HVAC control system configured to control the environment of a building zone. The HVAC control system includes a means for determining a number of people occupying the building zone and a means for determining properties of other heat transferring objects located within the building zone. The HVAC control system may also include a controller, the controller being configured to compute a projected heat gain in a building zone based on the determined number of people occupying the building zone and the determined properties of the other heat transferring objects located within the building zone.

### SUMMARY

The present invention is defined in the independent claim 1. A preferable embodiment is set out in the dependent claim. A window simulation controller for implementing and providing a simulated window within structure is provided. For example, the environmental controls of a building automation system may be utilized to provide a purging or refreshing blast of air that simulates the conditions commonly associated with the opening of a window. Moreover, the system and method may include additional sensory devices to enhance the simulation. Specifically, the system and method may increase the illumination in the area adjacent to the source of the increased airflow. Odor dispensing devices and recorded, generated, or simulated audio information may be further utilized to provide, for example, the scents and lighting associated with a refreshing or soothing breeze when a window is first opened.

In an example, a system for providing a simulated window utilizing environmental controls operable within a building automation system is disclosed. The system includes a building automation network deployed within a structure, a plurality of environmental controls in communication with the building automation network, wherein the plurality of automation controls are configured to control one or more environmental conditions within a space defined within the structure, a controller in communication with the plurality of environmental controls via the building automation network. The controller is configured to execute a first environmental control program to drive at least one of the plurality of environmental controls to a set point, and execute a transient environmental control program to increase an output of at least one of the plurality of environmental controls relative to the first environmental control program.

In another example, a computer-implemented method of simulating an open window utilizing environmental controls operable within a building automation system is disclosed. The computer-implemented method includes receiving an activation input via a building automation network deployed within a structure, initiating, at a controller, a transient environmental control program configured to control one or more environmental control devices in communication with the building automation network, increasing an output from one of the one or more environmental control devices beyond a steady state threshold in response to the transient environmental control program, and returning the output of the one of the one or more environmental control devices to the steady state threshold after a predetermined or random period of time has elapsed.

In yet another example, a controller configured to simulate a window utilizing environmental controls operable within a building automation system, is disclosed. The controller includes a communication interface configured to communicate with a building automation network deployed within a structure and a processor communicatively coupled to the communication interface and a memory. The memory stores processor executable instructions configured to initiate a transient environmental control program in response to an activation input received via the communication interface, communicate, via the communication interface, a control signal to at least one environmental control device to increase an output beyond a steady state threshold, and communicate a second control signal to the at least one environmental control device to return the output to the steady state threshold after a predetermined or random period of time has elapsed.

Other embodiments are disclosed, and each of the embodiments can be used alone or together in combination. Additional features and advantages of the disclosed embodiments are described in, and will be apparent from, the following Detailed Description and the figures. Not all the features and advantages may be utilized with each embodiment.

### BRIEF DESCRIPTION OF THE FIGURES

The embodiments will be further described in connection with the attached drawing figures. It is intended that the drawings included as a part of this specification be illustrative of the exemplary embodiments and should in no way be considered as a limitation on the scope of the invention. Indeed, the present disclosure specifically contemplates other embodiments not illustrated but intended to be included in the claims. Moreover, it is understood that the figures are not necessarily drawn to scale.
FIG. 1 illustrates an embodiment of a building automation system configured to implement a window simulation as disclosed and described herein;
FIG. 2 illustrates an exemplary portion of the building automation system deployed in association with a room to implement a window simulation within the room in accordance with the present invention as disclosed and described herein;
FIG. 2A illustrates another exemplary portion of the building automation system deployed in association with a room to implement a window simulation within the room in accordance with the present invention as disclosed and described herein;
FIG. 3 illustrates a functional block diagram of a field panel of the building automation system configured to implement the window simulation within the room in accordance with the present invention as disclosed and described herein;
FIG. 4 illustrates an overview of the components and elements of a window simulation controller application which may be employed in the field panel to implement the window simulation within the room in accordance with the present invention as disclosed and described herein;
FIG. 5 illustrates a flow diagram illustrating an exemplary process performed by the window simulation controller employed in the field panel to implement a window simulation within the room; and
FIG. 6 illustrates another flow diagram illustrating an exemplary process performed by the window simulation controller employed in the field panel to implement a window simulation within the room.

### DETAILED DESCRIPTION

There is a need to address the limitations in building automation systems and to provide for a building automation system and method that simulates the environmental effects of opening an exterior window to enable occupants in an interior space of a building to feel such effects so as to provide a comfortable and refreshing environment in which to live and work. Interior spaces are merely illustrative of the systems, methods, and apparatuses. That which is illustrated and equivalents thereto may be utilized in other types of spaces, including but not limited to, exterior spaces.

The exemplary embodiments illustrated provide the discovery of systems and methods for implementing and providing a simulated window within a structure. The present invention is not limited to those embodiments described herein, but rather, the disclosure includes all equivalents including those of different shapes, sizes, and configurations. The systems and methods can be used in any field benefiting from a window simulation system.

Preferred methods, algorithms, and materials are described below, although those similar or equivalent to that which is described herein can be used in practice or testing. The materials, methods, algorithms, and examples disclosed herein are illustrative only and are not intended to be limiting.

The terms "comprise(s)," "include(s)," "having," "has," "can," "contain(s)," and variants thereof, as used herein, are intended to be open-ended transitional phrases, terms, or words that do not preclude the possibility of additional acts or structures. The present disclosure also contemplates other embodiments "comprising," "consisting of' and "consisting essentially of," the embodiments or elements presented herein, whether explicitly set forth or not.

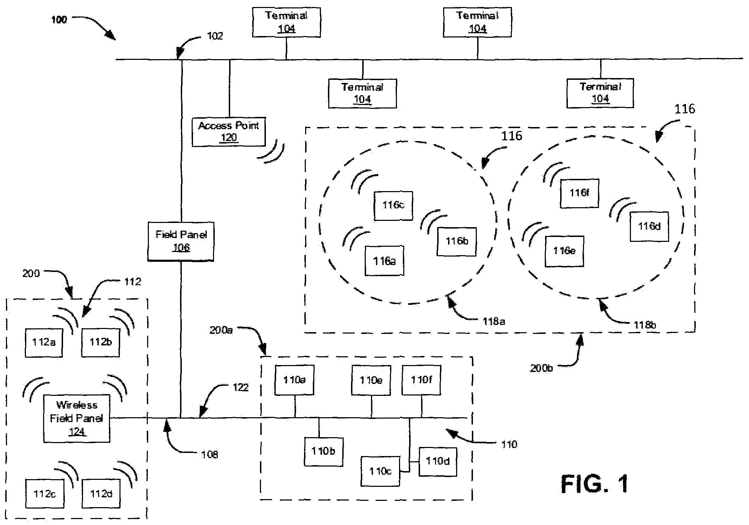

A more detailed description of the embodiments will now be given with reference to FIGs. 1-6. Throughout the disclosure, like reference numerals and letters refer to like elements. The present disclosure is not limited to the embodiments illustrated; to the contrary, the present disclosure specifically contemplates other embodiments not illustrated but intended to be included in the claims.

A simulated window may be advantageous and useful in providing, for example, an occupant with a reprieve or blast of fresh air within a space. Moreover, because the timing and intensity of this reprieve may be controlled by the building automation system, it may be configured to replicate the blast or gust of fresh air delivered when an exterior window is opened within a confined space. In other embodiments, duration and frequency of the reprieve may be controlled to simulate within the structure a breeze or other natural activity that an occupant may have sensed when opening an exterior window of a building to the outside environment.

The disclosed system and method may further include additional sensory devices to enhance the simulation and provide occupants with a sense of having opened an exterior window to a green or natural environment outside of a building. For example, the system and method may increase the illumination in the area adjacent to the source of the increased airflow to simulate the additional sun light or moon light that may enter a space or room upon the opening of an exterior window. Odor dispensing devices and recorded, generated, or simulated audio information may be further utilized to provide, for example, a refreshing or soothing sensation that replicates the experience of opening an exterior window.

The embodiments may include, among other things, environmental control devices, building automation components and wireless devices and transceivers. The embodiments may include, among other things, BACNet, IEEE 802.15.4 / ZigBee-compliant devices and components such as, for example, one or more personal area network (PAN) coordinators implemented as a field panel (FPX or PXC); a full function device (FFD) implemented as a floor level device transceiver (FLNX); and a reduced function device (RFD) implemented as a wireless room temperature sensor (WRTS). Regardless of the specific type and functionality of any given device or component, compliance with the BACNet and/or ZigBee standards ensure communication and interoperability with the building automation network and system deployed within the structure. The devices and components identified herein are provided as an example of environmental control devices, building automation components, wireless devices and transceivers that may be integrated and utilized within structure but are not intended to limit the type, functionality, and interoperability of the devices and teaching discussed and claimed herein.

One exemplary building automation system that may include the disclosed components and devices and may be configured to provide the windows simulation described above is the APOGEE® system provided by Siemens Industry, Inc., Building Technologies Division ("Siemens," Buffalo Grove, Illinois). The APOGEE® system may implement a BACnet protocol that allows for integration of multiple building systems from different manufacturers through open protocol interoperability. In this way, a WRTS provided by a first manufacturer may communicate data in a BACnet approved format to an APOGEE® field panel (FPX or PXC) or controllers for utilization by other sensors, actuators, drives, and environmental control devices provided by a second manufacturer. Alternatively, data or information may be transmitted directly between devices and systems via, for example, a wireless mesh network.

FIG. 1 illustrates an exemplary building automation system or control system 100 that may incorporate and implement the window simulation system and method disclosed herein. The control system 100 includes a first network 102 such as an automation level network (ALN) or management level network (MLN) in communication with one or more terminals 104 and a controller or field panel 106 such as PXC Modular field panel provided by Siemens. The field panel 106 is a programmable device that may couple the first network 102 to a second network 108 such as a field or floor level network (FLN). Alternatively, other types of control are contemplated, including but not limited to, a local control panel.

The second network 108, in this exemplary embodiment, may include a wired network 122 that connects to building environmental control devices 110 (individually illustrated as automation components 110a to 110f) to the one or more field panels 106. The second network 108 may further be coupled to one or more wireless building environmental control devices 112 through a wireless field panel 124. For example, the environmental control devices or devices 112 may include one or more wireless devices individually illustrated as devices 112a to 112f. In one embodiment, the devices 112 may be wirelessly deployed within a second room or space 200 defined within the structure. The wireless field panel 124 can be deployed within boundaries of the room 200 or can be positioned outside the room 200 but within a wireless transmission range of the devices 112. Similarly, the devices 110 may be deployed or wired within a room or space 200a within the structure controlled by the building automation system 100. In yet other embodiments, the devices 110 and 112 may be mixed or interspersed within a single room (not shown) or more than two rooms (not shown) to form a plurality of single mode or mixed mode (*i.e.*, both wired and wireless) connections to the field panel 106.

The control system 100 may further include one or more environmental control devices 116 (individually illustrated as environmental control devices 116a to 116f) grouped or arranged to establish subnets 118a and 118b within a room 200b. The one or more environmental control devices 116a to 116f may be, for example, temperature sensors, damper actuators, odor dispensing devices, lighting controls, sound generating devices, audio speakers, or combinations thereof that may be configured to wirelessly communicate information between each other and a wireless access point 120 coupled to the network 102. In operation, the device 116a may communicate with one or more other devices, for example, 116b and 116c, within the subnet-mesh network 118a by sending a message addressed to the network identifier, alias and/or media access control (MAC) address assigned to each of the interconnected automation components 116a to 116f and/or to the wireless access point 120.

For example, in one configuration, the individual environmental control devices and/or automation components 116a to 116c within the subnet mesh network 118a may communicate directly with the access point 120 or may be configured in a hierarchal manner such that only one of the components for example, automation component 116c, communicates with the access point 120. The devices and components deployed in the subnet 118b may be configured in a manner similar to or different from the components of subnet 118a. The subnets 118a and 118b may, in turn, represent the same or different areas or locations within the space 200b. By utilizing multiple locations within the space 200b, the building automation system 100 may enhance the window simulation by establishing cross breezes to further enhance the realism of the disclosed "open window" scenario. Alternatively, the system may be configured to generate sounds, including but not limited to, moving sounds to simulate moving trees, vehicles, or other items as well as other ambient sounds, including but not limited to, nature sounds (including but not limited to the sounds of birds and crickets).

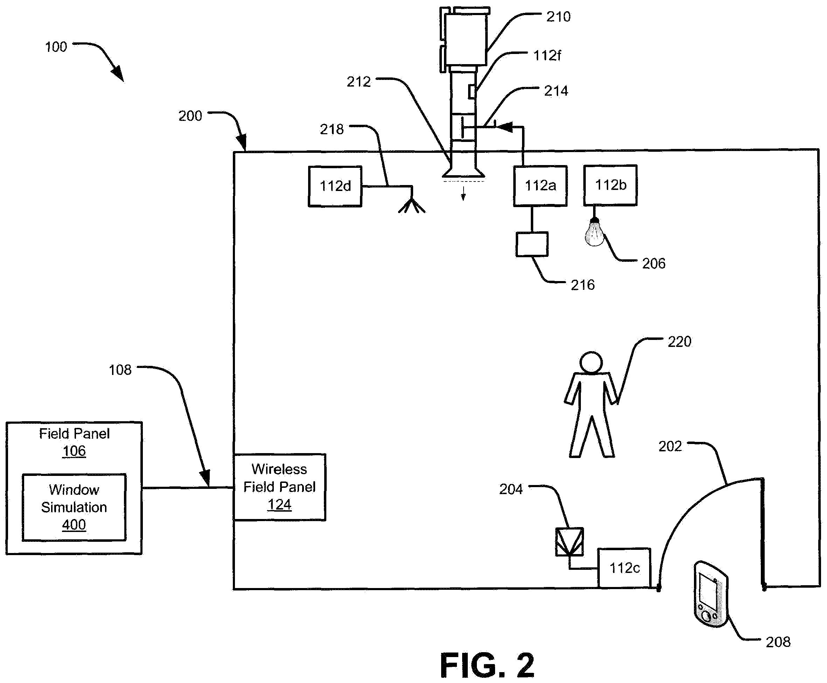

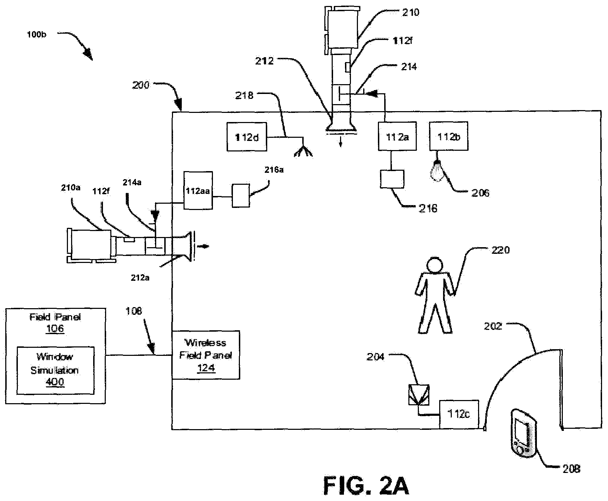

FIG. 2 illustrates an expanded view of the room 200 illustrated in FIG. 1, and FIG 2A illustrates an alternate embodiment of that which is illustrated in FIG 2. Referring to FIGS. 2-2A, in these exemplary illustrations, the room or space 200 represents an interior room within the structure controlled or managed by the building automation system 100, 100b. In these examples, the field panel 106 is illustrated coupled to the wireless field panel 124 via the second network 108. The wireless field panel 124, in turn, is deployed within the space 200. The wireless field panel 124 may be, for example, a full function controller configured to communicate with and/or control the environmental control devices 112a to 112f deployed within the space 200. Alternatively, the wireless field panel 124 may simply operate as a wireless access point (*see* access point 120 in FIG. 1) that establishes a communication link or channel between the devices 112a to 112f and the field panel 106.

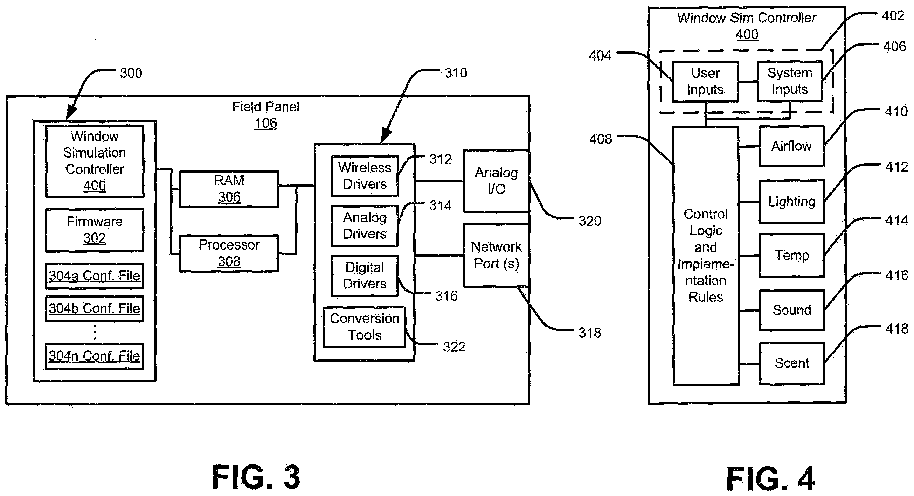

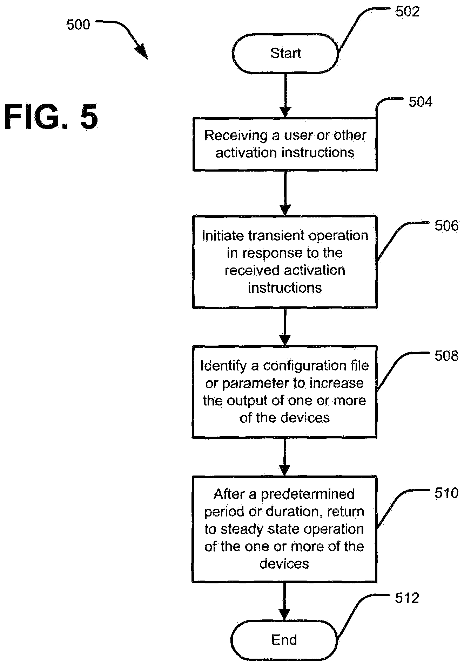

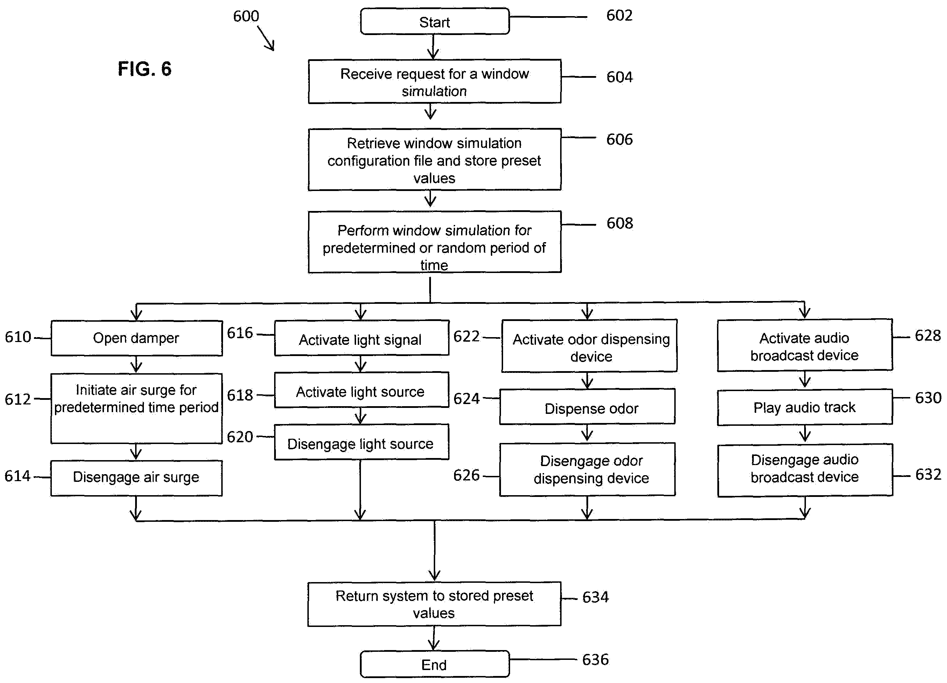

The field panel 106, in these illustrations, is illustrated to include or store a window simulation controller application 400 (illustrated in FIG. 4). The window simulation controller application 400 (also referenced as "window simulation controller" or "window sim controller") is configured to perform a windows simulation process or routine 500 (illustrated in FIG. 5) 600 (illustrated in FIG. 6) to control and direct the environmental control devices 112a to 112f deployed within the space 200 to simulate the environmental effects of opening an exterior window. For example, an occupant 220 may enter the room 200 through the doorway 202. Upon entering the room or space 200, a motion sensor 204 coupled to the device 112c may detect the occupant's presence and wirelessly communicate a motion signal to the wireless field panel 124. The wireless field panel 124, in turn, communicates a light activation signal to the device 112b in order to activate the light source 206 in preparation for, or in association with, controlling other environmental control devices 110a-110f, 112a-112f, or 116a-116f to simulate the environmental effects of opening an exterior window to the room 200. In these embodiments, the light source 206 may represent the lighting for the entire room 200 prior to initiating the simulation of opening an exterior window to the room 200 by the field panel 106 or simply a portion of the lighting in a specific section or location within the room 200 such a portion of a wall in the room 200 corresponding to the location of the simulated exterior window from which other environmental effects are sensed by the occupant 220 of the room during the simulation of opening the simulated exterior window. Alternatively, the motion sensor 204 may communicate the motion signal directly to the device 112b and the motion signal may, in turn, be utilized to active the light source 206.

The wireless field panel 124 further communicates the motion signal to the field panel 106 via the second network 108. In some embodiments, communication and receipt of the motion signal activates or triggers the window sim controller 400. In other embodiments or configurations, the occupant 220, for example, may trigger a switch or toggle portion of the device 112c (such as a room input/output unit having a physical switch or touch screen user interface input) in order to manually activate the window sim controller 400. In yet another embodiment, the occupant 220, for example, may utilize a remote application or interface to schedule or activate the window sim controller 400. For example, the occupant 220 may use an application (or app) executed on a device 208, including but not limited to, a smartphone, table, laptop, personal computer, or personal digital assistant to activate, schedule activation, or deactivate the window sim controller 400. In this configuration, the device 208, such as a personal digital assistant, may wirelessly communicate activation instructions via one or more access point 120 deployed within the structure. The activation instructions may then be relayed to the field panel 106 through the first or second networks 102, 108. Alternatively, the activation instructions may be communicated through one of the devices 112a to 112f and/or the wireless field panel 124 to the field panel 106 and the window sim controller 400.

Upon receipt of the motion signal or other activation instructions, the window sim controller 400 activates to create a simulation mimicking the effects of opening a window within the room 200, such as an exterior window to the building having the room 200. For example, in order to provide a gust of fresh air to the room 200, the window sim controller 400 may direct or control a variable air volume (VAV) system 210 to increase or maximize the airflow through an air grate or vent 212 for a predetermined, user-terminated, or random period of time corresponding to the opening of an exterior window and a gust of fresh air entering the room 200 through the simulated exterior window. Alternatively, if the VAV system 210 is operating at full capacity, the window sim controller 400 may direct the airflow controller portion of the device 112a to increase the opening or fully open a damper 214 and direct the full capacity to the vent 212 for a predetermined, user-terminated, or random period of time corresponding to the opening of an exterior window. In the illustrated configuration, the damper 214 is in fluid communication with the VAV system 210 and may be used to control or direct the airflow into the space 200. In other configurations, the damper 214 may be omitted and airflow controlled directly via the VAV system 210. The air grate or vent 212 may represent the approximate physical location of the simulated window. However, as further described herein, the field panel 106 may direct the light source 206 to increase illumination within the room 200 and/or project on a wall of the room 200 near the vent 212 to provide an occupant with the sensation of additional light entering the room at the location of the projection of the light source 206 in combination with the sensation that the gust of fresh air initiated by the field panel 106 is entering the room 200 from the location of the projection of the light source 206.

Referring to FIG. 2A, an additional VAV system 210a is illustrated which may be utilized to provide for directional or focused gusts of fresh air simulating a change in window air flow from the VAV system 210 to the VAV system 210a so as to simulate a gust of wind from another side of room 200. The window sim controller 400 may direct or control the VAV system 210a to increase or maximize the airflow through an air grate or vent 212a for a predetermined, user-terminated, or random period of time corresponding to the opening of an exterior window and a gust of fresh air entering the room 200 through the simulated exterior window. Alternatively, if the VAV system 210a is operating at full capacity, the window sim controller 400 may direct the airflow controller portion of the device 112aa to increase the opening or fully open a damper 214a and direct the full capacity to the vent 212a for a predetermined, user-terminated, or random period of time corresponding to the opening of an exterior window. In the illustrated configuration of FIG. 2A, the damper 214a is in fluid communication with the VAV system 210a and may be used to control or direct the airflow into the space 200. In other configurations, the damper 214a may be omitted and airflow controlled directly via the VAV system 210a. The air grate or vent 212a may represent the approximate physical location of the simulated window.

Referring again to FIGS. 2-2A, the devices 112a, 112aa may include or cooperate with, for example, one or more WRTS and/or humidity sensors 216, 216a configured to detect or determine one or more environmental conditions within the room 200. These environmental conditions often represent the conditions within the room as the building automation system 100, 100a operates in a steady state condition according to an established environmental control program or routine as may be administered by the firmware 302 (as illustrated in FIG. 3) of the field panel 106. The sensors 216, 216a generate sensor signals that represent the detected environmental condition. The sensor signals, in turn, may be utilized as an activation instruction to initiate the window sim controller 400 when the space is determined to be for example, too humid, too warm, or otherwise stuffy and/or uncomfortable. Activation of the window sim controller 400 represents a departure from the steady state environmental control program in favor of a transient program that serves to refresh or otherwise flush the air and other environmental conditions within the room 200 for a predetermined, user-terminated, or random period of time to define or simulate the opening of an exterior window within the room 200.

Referring again to FIG. 2, the control or command provided by the window sim controller 400 may be thought of as pushing the one or more VAV system 210 into an overdrive or increased output state for a predetermined, user-terminated, or random time period to simulate a gust of fresh air. The air pushed thought the system may, for example, be warm or cool air to simulate the state of the outside air. For example, if the one or more VAV system 210 were operating at sixty percent (60%) capacity, then the window sim controller 400 may command a twenty percent (20%) increase for a period of thirty seconds based on user window simulation activation input (such as via room input/output unit or device 112c) or an automated window simulation activation when an occupant is present in the room (such as via motion signaling by motion detector 204 to the field panel 106). This increased output of the one or more VAV system 210 for a limited time period as controlled by the window sim controller 400 exemplifies or defines the transient nature of the windows simulation disclosed herein.

In another control configuration, the window sim controller 400 may simply reset the operating threshold of the VAV system 210 to eighty percent (80%) capacity and then thirty (30) seconds later send a second command that resets the operating capacity back to the previous steady state level (*i.e.,* 60% in this example). In yet another embodiment, the increase or overdrive values and the time or duration for operation may be stored within the devices 112a to 112f and simply activated by a "start command" provided by the window sim controller 400 to the devices 112a to 112d to initiate a gust of fresh air to define the window simulation. In this manner, different devices deployed in different spaces throughout the structure can be programmed to react in specific and unique manners when activated by the windows simulation controller 400. Furthermore, in this configuration, the same activation instruction may be utilized throughout the structure to elicit different windows simulations throughout the structure. Alternatively, the window sim controller 400 may be configured to run at random times. Alternatively, the window sim controller 400 may be configured to run until a user or occupant terminates the simulation.

In further embodiments, the window simulation experience of a gust of air provided by the window sim controller 400 within the room 200 may be enhanced by interaction with a lighting control device 112b and/or an odor control dispensing device 112d. For example, the lighting control device 112b can be configured to raise the illumination level of the light source 206 in the vicinity of the vent 212. In this way, the light source 206 and the increased or gust of airflow through the vent 212 cooperate to mimic the effects of opening an exterior window into the room 200. The overall illusion and effect created by the window sim controller 400 may be augmented with a scent dispensed via the nozzle 218 of the odor dispensing device 112d, which may be located within the duct of the vent 212 to be hidden from view of an occupant of the room 200. The scent may be any smell or odor evocative of nature including, but not limited to, a pine tree scent, the smell of freshly cut grass, or ocean air scent. In other embodiments, for example, the scent may be themed based on the time of year including, but not limited to, a nutmeg smell around the holiday season. Alternatively, for example, the scent that is simultaneously dispensed by the odor dispensing device 112d in conjunction with the gust of fresh air directed into the room by the window sim controller 400 may be an olfactory stimulant known to induce increased performance or decrease stress of humans as well as being evocative of a natural scent, including but not limited to, peppermint scent and strawberry scent.

In another embodiment, an audio broadcast device 112f may also be employed within the building automation system 100 in association with the room 200, such as within the duct of the vent 212 and controlled by the window sim controller 400 to provide an auditory sensation to augment or complement the simulation of the opening of an exterior window within the room 200. For example, the device 112f may be a Siemens fire safety speaker Model S-HQ provided by Siemens. In this configuration, the device 112f may, upon activation from the window sim controller 400, play and directionally project recorded or generated sound files or other information. For example, the device 112f may store and broadcast audio files representative of natural or outdoor noises including, but not limited to, leaves rustling and birds chirping in association with the airflow increase or gust generated by the window sim controller 200 to define or simulate the opening of an exterior window within the room 200.

By utilizing the various environmental control devices 112a to 112f in various manners, the window sim controller 400 can produce the sensations normally associated with opening an exterior window in order to provide a reprieve to the occupant 220 of the space 200. The various types and functionalities of the individual devices may be tailored by the type of reprieve desired for a given space. Similarly, more or fewer devices may be implemented within given space 200 depending on the complexity of the simulation and the availability of resources and devices for implementation of the same.

The space 200 as illustrated in FIGs. 2-2A utilize wireless devices 112a to 122f to communicate with the field panel 106. However, in alternate embodiments, the space 200 may support or include both wired and wireless devices (*see* devices 110 and 112, respectively) without affecting the basic operation and/or functionality of the window sim controller 400.

FIG. 3 illustrates a functional block diagram of the field panel 106 configured to implement one or more aspects of the windows simulation process disclosed herein. In this embodiment, the field panel 106 includes a processor 308, a primary storage memory 300, a run-time memory 306, an analog input/output device 320 and a network interface port 318. Memory 300 is configured to store the windows simulation controller application 400 (illustrated in FIG. 4), firmware 302, communication interface 310 (not shown stored in memory 300 in FIG. 3 to better illustrate its function within the field panel 106) and one or more configuration files 304a to 304n. The processor 308 is operatively configured to invoke and execute software programs stored in memory 300 such as firmware 302, window simulation controller 400, and communication interface 310. The processor 308 also retrieves and uses the configuration files 304a-304n to initialize the window simulation controller 400 as further described below.

Memory 300 may be, for example, a read-only memory (ROM), a nonvolatile flash memory device, a hard drive, a universal serial bus (USB) connected storage device, any other long-term storage or computer-readable medium, or combination thereof. Moreover, the memory 300 may be any external storage device or database for storing data. Examples include, but are not limited to, a hard drive, compact disc ("CD"), digital video disc ("DVD"), memory card, memory stick, floppy disc, universal serial bus ("USB") memory device, any other device operative to store data, or combination thereof.

Firmware 302 may include the device operating system that provides the interface and control logic between the field panel hardware and the field panel software applications, such as the window simulation controller application 400. While the window sim controller 400 is illustrated stored within the memory 300 of the field panel 106, it will be understood that the window sim controller 400 may be stored in any other storage location that is distributed and/or accessible by the processor 308.

The window sim controller 400, as illustrated above in connection with FIGs. 2-2A, provide the instructions and controls necessary to drive and direct the devices 112 (illustrated in FIGs. 1-2A as 112a-112f) in the creation of a simulated open window experience. The window sim controller 400, as illustrated in FIG. 4, includes an input module or routine 402 comprising a user input routine 404 and a system input subroutine 406. The user input routine 404 is configured and programmed to receive, for example, the motion signal generated by the motion detector 204 and/or the manual input signal supplied when the occupant 220 engages the toggle or switch portion of the room input/output unit or device 112c (illustrated in FIG 2). The system input subroutine 406 processes or responds to one or more predetermined activation inputs including, but not limited to, timed inputs, programs events (*i.e.*, a change the room configuration or occupancy status), other preprogrammed activation instructions, or combination thereof.

The activation inputs received via the input routine 402 may be processed and communicated to a control logic module or routine 408. The control logic module 408 includes one or more implementation rules or instructions configured to determine when and how the window sim controller 400 executes with respect to a given space 200. For example the control logic module 408 may determine and analyze the capabilities available within the space 200 by retrieving one or more configuration files 304 stored in the memory 300 (illustrated in FIG. 3).

Referring again to FIG. 3, the configuration files 304 (individually identified as the configuration files 304a to 304n) may be stored within the memory 300 and provide a comprehensive list of the capabilities and devices available for the implementation of the simulated window reprieve within the space 200. For example, returning to FIG. 2, the control logic module 408 may, upon receiving an activation input from the input routine 402, access the configuration file 304a corresponding to the room or space 200. The configuration file 304a may, in turn, identify that the devices 112a to 112f are deployed within the room 200 and possess characteristics and capabilities such as airflow/temperature control (112a), scent dispensing (112d), lighting control (112b) and audio broadcast device control (112f). Moreover, the configuration file 304a may provide individualized timing information for the space 200. Alternatively, the control logic module 408 may store the timing and execution information in one or more implementation rules stored therein, including the storage of instructions to run a command for random durations. For example the control logic module 408 may include a default window simulation time or duration of fifteen (15) seconds. If the configuration file 304 does not contain time or duration information for the window simulation reprieve, the control logic module 408 may use the default information stored therein.

In another embodiment, individual configuration files 304a to 304f are stored on respective devices 112a to 112f. The memory 300, in this configuration, includes a searchable lookup table that identifies each of the devices to be activated in order to produce a desired burst of fresh air, light, etc. within the space 200. In yet another configuration, each device 112a to 112f includes and stores multiple configuration files 304a to 304n allowing different functionality to be activated by the window sim controller 400.

The term configuration file as defined and utilized herein is intended to encompass individual environmental control parameters, thresholds and values as well as data files containing multiple environmental control parameters, thresholds, and values. Environmental control parameters, thresholds, and values include variables such as fan operating speed, illumination level, timer values, scent activation command and/or scent activation duration, sound file information and the like. In one format, the configuration file is a structured data file such as an extensible mark-up language (XML) file. The structured data file includes descriptive variable names and their corresponding values. In other formats, the structured data file includes information for multiple devices 112 categorized and organized by a unique device identifier.

Referring again to FIG. 4, once the control logic module 408 determines the devices and capabilities available within the space 200, one or more corresponding subroutines 410 to 418 may be activated. For example, returning to FIG. 2, the configuration file 304a may indicate the availability of the airflow control device 112a, the lighting control device 112b and the odor dispensing device 112d. The control logic module 408 may then access one or more of the airflow subroutine 410, lighting subroutine 412, temperature control subroutine 414, audio control subroutine 416 and/or scent control subroutine 418. Each of the subroutines 410 to 418 may be programmed with the information necessary to control the hardware in communication with the devices 112. For example, the airflow subroutine 410 is programmed to read one or more of the configuration files 304 and utilize the threshold and values necessary to control, for example, the damper 214. The implementation rules stored within the control logic module 408 may further determine the order and timing in which the individual subroutines 410 to 418 are executed to simulate the opening of a window within the space 200.

Returning to FIG. 3, the information and instructions from the window sim controller 400 may be loaded or otherwise accessible in the run-time memory (such as a read access memory or RAM) 306. For example, once the window sim controller 400 has determined what and when individual devices 112 are to be activated, the information or steps may be communicated to the RAM 306 for execution by the processor 308. The processor 308, in turn, communicates the results and commands for implementation of the window simulation to the communication interface 310. The communication interface 310 stores drivers 312 to 316 which are adapted to translate instructions from the processor 308 into the correct signaling and/or control format for use by the devices 112. For example, the processor 308 may communicate instructions for the wireless device 112a to the communication interface 310. The communication interface 310, upon receiving the instructions, accesses the wireless drivers 312 to format and convert the received instructions for transmission to the wireless device 112a via the wireless field panel 124. In particular, the formatted instructions are communicated to the wireless field panel 124 through the network port 318 and the second network 108.

In an alternate embodiment, the field panel 106 may directly control or drive one or more components or devices utilized by the window simulation routine 400. For example, if the processor 308 provides instructions to drive an analog device such as the damper 214, then the communication interface 310 accesses the analog driver 314 to format and prepare the instructions for the analog device to be controlled. The output or result from the analog driver 314 can in turn be communicated via the analog I/O 320. In this way, a digital command from the processor 308 can be converted to a voltage or current potential by the analog driver 314 and then communicated via the analog I/O 320 to the device.

The digital drivers 316 may cooperate with the conversion tools 322 to format and alter the output of the processor 308 between, for example, one or more proprietary communication formats. In this way, the conversion tools 322 and digital driver 316 may provide a mechanism by which third-party devices and vendors may be implemented and utilized in connection with the window sim controller 400.

FIG. 5 illustrates a flowchart illustrating the windows simulation routine 500 comprising the steps, elements, and processes that may be implemented in connection with an embodiment of the window sim controller 400. The process 500 performed by the window sim controller 400 may be activated or run (as reflected by the start reference block 502 in Fig. 5) in conjunction with the environmental control system portion of the building automation system 100, for example, as controlled by firmware 302. Specifically, when the building operating system 100 is operating normally in a steady state condition.

Initially, the window sim controller 400 receives an activation input communicated to the field panel or controller via the building automation network deployed within the structure (step 504). The activation input may be a manual input from a user activating a window simulation button on a room input/output unit, or may be automatically triggered by the occurrence of a programmed event. Upon receipt of the activation input, the window sim controller 400 signals the firmware 302 to interrupt the operation of the environmental control system from a steady state operation and to initiate a transient operation configured to generate a simulated window and the associated effects (step 506). The window sim controller 400 identifies a configuration file 304 or one or more individual parameters available within the room to be controlled. The identified configuration file 304 or parameters are utilized to alter an output, such as by increasing an output, such as the airflow or illumination from one of the one or more environmental control devices beyond a steady state level or threshold (step 508). The environmental control devices are typically clustered in a specific area or location within the room in order to provide localized and directional surge of air associated with the simulated exterior window. Other configurations and layouts are contemplated.

The transient conditions specified by the configuration file 304 are maintained by the window sim controller 400 for a predefined period. For example, the window sim controller 400 may maintain an increased airflow and illumination state for a period of fifteen (15) seconds. Upon expiration of the predefined period, the window sim controller 400 returns the environmental control system to the previous steady state level (step 510) before ending processing for the window simulation (step 512).

While the firmware 302, window simulation controller 400 and routine modules 402-418 are described as being implemented as software executable by a processor 308, the present implementation may be implemented as another combination of hardware and software or hardware alone, such as in an application specific integrated circuit (ASIC).

FIG. 6 illustrates another flow diagram illustrating an exemplary process 600 performed by the window simulation controller employed in the field panel to implement a window simulation within the room. At block 602 the window sim controller 400 is activated and receives a request for a window simulation at block 604. The window simulation configuration file is retrieved and present steady state levels are stored at block 606. At block 608 the window simulation for a predetermined or random period of time is performed. Alternatively, the window simulation may be programmed to run until it is terminated by a user or occupant. Thereafter, any number of simulation events may occur either as set by the user or as activated by random occurrence. One or more events include but are not limited to: opening a damper at block 610, initiating an air surge for a predetermined time period (or a random time period) at block 612, and disengaging the air surge thereafter at block 614. Other events may include activating a light signal at block 616, activating a light source at block 618, and thereafter disengaging the light source at block 620. Other events may include activating an odor dispensing device at block 622, dispensing an odor at block 624, and disengaging an odor dispensing device at block 626. Still other events may include activating an audio broadcast device at block 628, playing an audio track at block 630, and disengaging the audio broadcast device thereafter at block 632. After the one or more simulation events occur, the system is returned to its original stored preset steady state levels at block 634 and the method ends at block 636.

A further advantageous example is a window simulation controller configured to simulate a window utilizing environmental controls operable within a building automation system (100, 300, 400, 500, 600), the window simulation controller comprising:
a communication interface (310) configured to communicate with a building automation network (318) deployed within a structure;
a processor (308) communicatively coupled to the communication interface (310) and a memory (300), wherein the memory stores a window simulation application having processor executable instructions (400) configured to:
   receive, via the communication interface, an activation input to simulate the opening of window to a space within the structure (404, 406, 504, 604);
   communicate, via the communication interface, a first control signal to a variable air volume system configured to control airflow to the space (610), the first control signal commanding the variable air volume system to cause an air surge to the space (612); and
   communicate, via the communication interface after a pre-determined time period, a second control signal to the variable air volume system to cause the variable system to end the air surge (614).

A further advantageous sample is that the window simulation application further comprising processor executable instructions configured to:
communicate, via the communication interface, a third control signal to an odor dispensing device disposed within the structure (622) such that the odor dispensing device dispenses an odor to the space (624) in association with the air surge (612).

A further advantageous example is that the window simulation application further comprising processor executable instructions configured to:
communicate, via the communication interface, a fourth control signal to an audio broadcast device disposed within the structure (628) such that the audio broadcast device broadcasts (630), in association with the air surge (612), an auditory sensation to the space corresponding to the opening of an exterior window of the structure.

It should be understood that various changes and modifications to the presently preferred embodiments described herein will be apparent to those skilled in the art. Such changes and modifications may be made without departing from the scope of the present invention and without diminishing its intended advantages. It is therefore intended that such changes and modifications be covered by the appended claims.

Furthermore, those of skill in the art will appreciate that embodiments not expressly illustrated herein may be practiced within the scope of the present discovery, including the features described herein for different embodiments may be combined with each other and/or with currently-known or future-developed technologies while remaining within the scope of the claims presented here. It is therefore intended that the foregoing detailed description be regarded as illustrative rather than limiting. It is understood that the following claims are intended to define the scope of this discovery. Furthermore, the advantages described above are not necessarily the only advantages of the discovery, and it is not necessarily expected that all of the described advantages will be achieved with every embodiment of the discovery.

## Claims

1. A window simulation controller (400) configured to simulate a window utilizing environmental controls operable within a building automation system (100, 300, 400, 500, 600), the window simulation controller comprising:
a communication interface (310) configured to communicate with a building automation network (318) deployed within a structure;
a processor (308) communicatively coupled to the communication interface (310) and a memory (300), wherein the memory stores a window simulation application having processor executable instructions configured to:
receive, via the communication interface (310), an activation input to simulate the opening of window to a space within the structure;
communicate, via the communication interface (310), a first control signal to a variable air volume system configured to control airflow to the space, the first control signal commanding the variable air volume system to cause an air surge to the space; and
communicate, via the communication interface (310) after a pre-determined time period, a second control signal to the variable air volume system to cause the variable system to end the air surge;
**characterized in that**,
the window simulation application further comprising processor executable instructions configured to:
communicate, via the communication interface (310), a fourth control signal to an audio broadcast device disposed within the structure such that the audio broadcast device broadcasts (630), in association with the air surge, an auditory sensation to the space corresponding to the opening of an exterior window of the structure.

2. The window simulation controller (400) according to claim 1, wherein the window simulation application further comprising processor executable instructions configured to:
communicate, via the communication interface (310), a third control signal to an odor dispensing device disposed within the structure (622) such that the odor dispensing device dispenses an odor to the space (624) in association with the air surge.

## Patentansprüche

1. Fenster-Simulationscontroller (400), welcher dafür ausgelegt ist, ein Fenster unter Verwendung von Umweltreglern zu simulieren, die innerhalb eines Gebäudeautomationssystems (100, 300, 400, 500, 600) betreibbar sind, wobei der Fenster-Simulationscontroller umfasst:
eine Kommunikationsschnittstelle (310), die dafür ausgelegt ist, mit einem Gebäudeautomationsnetzwerk (318) zu kommunizieren, das innerhalb einer Struktur implementiert ist;
einen Prozessor (308), der mit der Kommunikationsschnittstelle (310) und einem Speicher (300) kommunikationsfähig gekoppelt ist, wobei der Speicher eine Fenstersimulationsanwendung mit vom Prozessor ausführbaren Anweisungen speichert, die dafür ausgelegt sind:
über die Kommunikationsschnittstelle (310) eine Aktivierungseingabe zu empfangen, um das Öffnen eines Fensters eines Raumes innerhalb der Struktur zu simulieren;
über die Kommunikationsschnittstelle (310) ein erstes Steuerungssignal an ein variables Volumenstromsystem zu übermitteln, das dafür ausgelegt ist, den Luftstrom in den Raum zu steuern, wobei das erste Steuerungssignal das variable Volumenstromsystem veranlasst, einen Luftstoß in den Raum zu verursachen; und
über die Kommunikationsschnittstelle (310) nach einer vorbestimmten Zeitspanne ein zweites Steuerungssignal an das variable Volumenstromsystem zu übermitteln, um das variable System zu veranlassen, den Luftstoß zu beenden;
**dadurch gekennzeichnet, dass**
die Fenstersimulationsanwendung ferner vom Prozessor ausführbare Anweisungen umfasst, die dafür ausgelegt sind:
über die Kommunikationsschnittstelle (310) ein viertes Steuerungssignal an eine innerhalb der Struktur angeordnete Audio-Ausstrahlungsvorrichtung zu übermitteln, so dass die Audio-Ausstrahlungsvorrichtung in Verbindung mit dem Luftstrahl eine akustische Empfindung in dem Raum ausstrahlt (630), die dem Öffnen eines äußeren Fensters der Struktur entspricht.

2. Fenster-Simulationscontroller (400) nach Anspruch 1, wobei die Fenstersimulationsanwendung ferner vom Prozessor ausführbare Anweisungen umfasst, die dafür ausgelegt sind:
über die Kommunikationsschnittstelle (310) ein drittes Steuerungssignal an eine innerhalb der Struktur angeordnete Geruchsabgabevorrichtung zu übermitteln (622), so dass die Geruchsabgabevorrichtung in Verbindung mit dem Luftstoß einen Geruch in den Raum abgibt (624).

## Revendications

1. Contrôleur de simulation de fenêtre (400) configuré pour simuler une fenêtre en utilisant des moyens de contrôle de l'environnement, pouvant servir dans un système d'immotique de bâtiment (100, 300, 400, 500, 600), le contrôleur de simulation de fenêtre comprenant :
une interface de communication (310) qui est configurée de manière à ce qu'elle communique avec un réseau d'immotique de bâtiment (318) qui est déployé à l'intérieur d'une structure ; et
un processeur (308) qui est couplé en termes de communication à l'interface de communication (310) et à une mémoire (300), dans lequel la mémoire stocke une application de simulation de fenêtre qui comporte des instructions exécutables par processeur qui sont configurées de manière à ce qu'elles réalisent les actions qui suivent :
la réception, via l'interface de communication (310), d'une entrée d'activation afin de simuler l'ouverture d'une fenêtre sur un espace à l'intérieur de la structure ;
la communication, via l'interface de communication (310), d'un premier signal de commande à un système de volume d'air variable qui est configuré de manière à ce qu'il contrôle une circulation d'air sur l'espace, le premier signal de commande commandant le système de volume d'air variable afin qu'il génère un courant d'air soudain ou à-coup d'air sur l'espace ; et
la communication, via l'interface de communication (310) après une période temporelle prédéterminée, d'un second signal de commande au système de volume d'air variable afin de forcer le système de volume d'air variable à mettre fin à l'à-coup d'air ;
**caractérisé en ce que** :
l'application de simulation de fenêtre comprend en outre des instructions exécutables par processeur qui sont configurées de manière à ce qu'elles réalisent l'action qui suit :
la communication, via l'interface de communication (310), d'un quatrième signal de commande à un dispositif de diffusion audio qui est disposé à l'intérieur de la structure de telle sorte que le dispositif de diffusion audio diffuse (630), en association avec l'à-coup d'air, une sensation auditive sur l'espace qui correspond à l'ouverture d'une fenêtre extérieure de la structure.

2. Contrôleur de simulation de fenêtre (400) selon la revendication 1, dans lequel l'application de simulation de fenêtre comprend en outre des instructions exécutables par processeur qui sont configurées de manière à ce qu'elles réalisent l'action qui suit :
la communication, via l'interface de communication (310), d'un troisième signal de commande à un dispositif de diffusion d'odeur qui est disposé à l'intérieur de la structure (622) de telle sorte que le dispositif de diffusion d'odeur diffuse une odeur sur l'espace (624) en association avec l'à-coup d'air.
